# NEUE EUROPÄISCHE PATENTSCHRIFT

(11) **EP 0 372 520 B2**
(45) Veröffentlichungstag und Bekanntmachung des Hinweises auf die Entscheidung über den Einspruch: **16.06.1999**
(45) Hinweis auf die Patenterteilung: 28.10.1992
(21) Anmeldenummer: 89122477.6
(22) Anmeldetag: 06.12.1989
(51) Int. Cl.: C02F 1/50, C02F 3/34

(54) **Verfahren zur Herabsetzung der Schleim- und Belagbildung in Anlagen**
Slime and deposits controlling process in industrial plants
Procédé pour diminuer les incrustations dans les installations

(30) Priorität: 09.12.1988 DE 3841596
(43) Veröffentlichungstag der Anmeldung: 13.06.1990
(73) Patentinhaber: RHONE-POULENC CHIMIE, 92408 Courbevoie Cédex (FR)
(72) Erfinder: Oberkofler, Jörg, Dr., A-4863 Seewalchen (AT); Möller-Bremer, Christine, Dr.-Ing., D-6200 Wiesbaden (DE)
(74) Vertreter: Bernasconi, Jean

(56) Entgegenhaltungen:
- FR-A- 2 472 540
- FR-A- 2 607 490
- US-A- 3 773 623
- US-A- 4 684 469
- US-A- 4 810 385
- A.Geller, Wochenblatt für Papierfabrikation, 2, S. 49 ff (1984)

## Beschreibung

Die Erfindung bezieht sich auf ein Verfahren zur Herabsetzung der Schleim- und Belagbildung in Anlagen, in denen Wasser im Kreislauf geführt wird. Sie hat auch eine Anlage zur Durchführung dieses Verfahrens sowie Anwendungen dieses Verfahrens zum Gegenstand.

Bei Wasserkreisläufen, insbesondere bei der zunehmend praktizierten Kreislaufschließung des Siebwassers an Papiermaschinen und bei Kühlwasserkreisläufen, kommt es immer wieder zu Schleimbildung und/oder zu Betagbildung an festen Oberflächen und in der flüssigen Phase (vgl. Vorträge anläßlich des 5. PTS-WAF-Lehrgangs, Fortbildungskurs zur Wasser- und Abwasseranalytik, Kontrolle des Einsatzes von Mikrobioziden in der Papiererzeugung, Veranstalter: Papiertechnische Stiftung, 8000 München) sowie Hans-Dietrich Held "Kühlwasser", Vulkan-Verlag Dr.W Claussen, Essen, 1977, S.70-73.

Bei der bei Papiermaschinen zunehmend praktizierten Kreislaufschließung des Siebwassers finden Mikroorganismen durch das im Siebwasser vorhandene hohe organische und anorganische Nährstoffangebot und ein günstiges umgebendes Milieu, wie erhöhte Temperatur, pH-Wert nahe dem Neutralpunkt und Sauerstoffeintrag, sehr gute Wachstumsbedingungen vor. Da viele der Mikroorganismen nicht als freie Organismen im Kreislaufwasser vorhanden sind, sondern sich an die Faser-, Füll und Feinstoffe und an die Oberflächen der Maschinenteile, wie z.B. Leitungen, Behälter und Pumpen, anlagern, kommt es zur unerwünschten Schleim- und Belagbildung. Beim Lösen des Schleims oder Belags von den Oberflächen führt dies zur Bildung von Batzen und damit gegebenenfalls zu Löchern in der Papierbahn. Dadurch wird die Papierbahn geschwächt, d.h. es kann zu Abrissen der Papierbahn und damit zu Maschinenstilliständen kommen. Um diese Schleim- und Belagbildung zu verhindern, ist es bekannt, dem Siebwasser Biozide, Lignosulfonate oder Enzyme zuzusetzen.

Durch den Einsatz von Bioziden wird das Wachstum der Mikroorganismen unterdrückt und die Mikroorganismen werden zum Teil geschädigt. Der Einsatz von Bioziden wird jedoch immer kritischer bewertet. Je größer die Menge an Biozid ist, desto größer ist nämlich auch die Schädigung der Umwelt, der das Siebwasser bei Kreislaufentleerung zugeführt wird. Da Mikroorganismen gegenüber Bioziden zur Resistenzbildung neigen, ist es ferner notwendig, häufiger die bioziden Wirksubstanzen zu wechseln und/oder ihre Menge zu erhöhen. Dies bedeutet eine erneute erhebliche Umweltbelastung bzw. erhebliche Kosten z.B. für eine nachgeschaltete adaptierte Kläranlage oder einen Vorfluter.

Lignosulfonate werden als sogenannte Komplexbildner eingesetzt, die unter bestimmten Voraussetzungen die Nahrungsaufnahme der Mikroorganismen unterbinden. Manchmal muß mit dem Lignosulfonat noch ein Biozid eingesetzt werden, allerdings in erheblich geringerem Ausmaß als bei alleiniger Bioziddosierung (vgl. DE-PS 34 47 686). Die Problematik der Biozide bleibt also in abgeschwächter Form vorhanden.

Enzyme werden dem Siebwasserkreislauf beigegeben, um die hochmolekularen Polymere, die die Schleim- und Belagbildung fördern in niedermolekulare für die Schleim- und Belagbildung unkritische Moleküle umzuwandeln. Dieses Verfahren ist zwar umweltfreundlich, hat sich aber in der großtechnischen Anwendung bisher nicht bewährt, vermutlich weil dadurch nur eine kurzzeitige Viskositätsherabsetzung erzielbar ist, die von den Enzymen gebildeten Hydrolyse- oder sonstigen niedrigmdekularen Produkte für die schleimbildenden Mikroorganismen aber sogar bevorzugte Nährstoffe darstellen können.

In der US-A-4684469 ist ein Verfahren zur Schleimbekämpfung beschrieben, bei dem Enzyme in Kombination mit Bioziden eingesetzt werden.

Bei den Kühlkreisläufen besteht die Problematik, daß durch Leckagen oder Berührungsstellen mit dem Produktstromkreislauf, wie Kondensieren von Gasen im Kühlkreislauf, die bei Verdampfungsvorgängen des Produktstromkreislaufs entstehen, in den meisten Fällen organische Verunreinigungen in das Kreislaufwasser gelangen. Hierdurch wachsen wiedarum Mikroorganismen. Diese Mikroorganismen bilden zusammen mit den organischen und anorganischen Verunreinigungen bevorzugte Ablagerungen aufden Flächen der Wärmetauscher und vermindern somit drastisch den Warmeübergang. Ein häufiges und kostenintensives Reinigen der Wärmetauscher wird notwendig, um die notwendige Wärmeabfuhr für den jeweiligen Prozeß aufrechtzuerhalten. Auch in diesem Fall werden überwiegend Biozide eingesetzt, um eine Schleim- und Belagbildung auf den Wärmetauscherflächen herabzusetzen.

Aufgabe der Erfindung ist es daher, für Anlagen mit Wasserkreisläufen eine umweltfreundliche Methode zu finden, bei der die Schleim- und Belagbildung im Wasserkreislauf herabgesetzt wird und damit die Stillstandszeiten der Anlage gemindert werden.

Gelöst wird diese Aufgabe durch ein Verfahren zur Herabsetzung der Schleim- und Belagbildung in Anlagen, in denen Wasser im Kreislauf geführd wird, ohne Zusatz von Bioziden, wobei dem Kreislaufwasser gezielt in Abhängigkeit von der organischen Fracht nicht-sessile, lebende Mikroorganismen kontinuierlich zugegeben werden, die durch ihre Nährstoffaufnahme den im Kreislaufwasser vorhandenen schleim- und belagbildenden Mikroorganismen die Nährstoffe entziehen, wobei die Mikroorganismen zur Gruppe der Bakterien und Pilze gehören. Bevorzugte Ausführungsformen ergeben sich aus der folgenden Beschreibung.

Überraschenderweise tritt bei der Durchführung des erfindungsgemäßen Verfahrens, bei dem die Mikroorganismen dem Kreislaufwasser gezielt in Abhängigkeit von der organischen Fracht beigegeben werden, eine deutliche Herabsetzung der Schleim- und Belagbildung an festen Oberflächen und in flüssiger Phase ein, obwohl die Beigabe der Mikroorganismen eine zusätzliche organische Verunreinigung der Kreislaufwässer darstellt.

Mit dem Verfahren nach der Erfindung gelingt es, die verschiedensten Kreislaufwässer umweltfreundlich so zu behandeln, daß die Schleim- und Belagbildung weitgehend herabgesetzt wird und die Stillstandszeiten der Anlagen gemindert werden.

Als Mikroorganismen haben sich für das erfindungsgemäße Verfahren insbesondere Bakterien als geeignet erwiesen, und zwar vor allem die Bakterien der taxonomischen Gruppen: Aeromonas/Vibrio, Acinetobacter, Alcaligenes, Enterobakterien, Pseudomonas, Bacillus, Lactobacillus, Micrococcus, Staphylococcus und Streptococcus, insbesondere Aeromonas hydrophila, Acinetobacter calcoacetica, Alcaligenes eutrophus; Escherichia coli; Nitrosomonas, Nitrobacter, Bacillus megaterium, -macerans, -polymyra, -subtilis, -stearothermophilus, -coagulans, -circulans, -cereus, -pasteurii; Chromatium; Pseudomonas arvilla, -putida, -stutzeri, -fluorescens, -denitrificans, - aeruginosa; Zoogloea; Zymomonas; Leuconstoc; Proteus vulgaris; Sporosarcina ureae; Rhodopseudomonas; Nocardia; Mycobacterium; Flavobacterium; Agrobacterium; Cytophaga; Sporocytophaga; Streptomyces; Micromonospora; Clostridium pectinovorum, -felsineum; Azotobacter Streptococcus; Cellulomonas; Azomonas; Rhizobium; Thiobacillus, Thiothrix, Streptobacillus, Spaerothilus, Enterobacter aerogenes; Serratia; Propionibacterium; Micrococcus; Arthrobacter, Corynebacterium, Brevibacterium; Photobacterium; Xanthomonas, Chromobacterium, Vibrio, Acetobacter und Lactobacillus. Nachstehend wird deshalb in erster Linie auf Bakterien Bezug genommen.

Es sind jedoch auch andere Mikroorganismen bei dem erfindungsgemäßen Verfahren einsetzbar, z.B. Pilze, wie die Pilze der Gruppen Myxomyceten, Phycomyceten, Ascomyceten, Basidiomyceten und Deuteromyceten, insbesondere Acrasiales, Asperigillus niger, -oryzae, -wentii; Candida lipolytica, tropicalis; Saccharomyces; Chaetomium; Cryptococcus.

Es können auch Milchungen der Bakterien oder Pilze untereinander oder Mischungen von Bakterien und Pilzen eingesetzt werden.

Die Bakterien, die erfindungsgemäß verwendet werden, sind nicht sessile Bakterien, d.h. es werden solche Mikroorganismen bzw. Bakterien ausgewählt, die keine oder gegenüber den in der Anlage vorhandenen schleim- und belagbildenden Mikroorganismen bzw. Bakterien nur eine geringe Neigung haben, sich an Oberflächen festzusetzen.

Die Neigung der zugegebenen Mikroorganismen bzw. Bakterien, sich an Oberflächen festzusetzen, kann dabei erfindungsgemäß dadurch weiter reduziert werden, daß dem Kreislaufwasser Tenside zugesetzt werden. Als Tensid hat sich insbesondere ein von der Firma KW Kalos & Wiechmann GmbH, Hude, erhältliches Tensid mit der Bezeichnung "Konsan" als geeignet erwiesen.

Nach dem erfindungsgemäßen Verfahren werden die Bakterien in einer relativ großen Menge zugesetzt. Weiterhin werden sie nicht als Batzen, Flocken oder Kolonien sondern vorzugsweise als vereinzelte Bakterien eingesetzt. Durch ihre große Menge und ihre Vereinzelung weisen die Bakterien eine sehr große Gesamtoberfläche auf, so daß sie zu einer starken Absorption oder Aufnahme der im Kreislauf vorhandenen Nährstoffe führen. Es stellt sich damit ein Wettbewerb um die in dem Kreislaufwasser vorhandenen Nährstoffe ein, welcher, dank der hohen Nährstoffaufnahme durch die zugegebenen nicht sesilen Bakterien zu deren Gunsten, d.h. zu Lasten der schleim- und belagbildenen Mikroorganismen ausgeht.

Damit die Bakterien möglichst stark vereinzelt dem Kreislaufwasser zugegeben werden, wird erfindungsgemäß vorzugsweise von Trockenbakterien oder Mischkulturen von Trockenbakterien ausgegangen, die in ein vorgegebenes Volumen eingerührt werden, wobei nach einer Aktivierungszeit von z.B. ein bis zehn Stunden die so vereinzelten aktivierten Bakterien dem Kreislaufwasser zugegeben werden können.

Als besonders geeignet haben sich bei dem erfindungsgemäßen Verfahren Mischkulturen von Trockenbakterien erwiesen. Solche Mischkulturen sind beispielsweise unter der Bezeichnung "DBC plus" von der Firma Enviroflow Flow Laboratories, Inc., A Flow General Company McLean, Va., USA auf den Markt gebracht werden.

Die betreffende "DBC plus"-Mischkultur wird dabei entsprechend dem Nährstoffangebot in dem Kreislaufwasser ausgewählt. Die Florenanalyse der neuen "DBC plus" Trockenbakterien-Mischungstypen und der taxonomischen Hauptgruppe ist wie folgt: Aeromonas, Acinotobacter, Alcaligenes, Enterobakterien, Pseudomonas andere Grammnegative, Bacillus, Lactobacillus, Micrococcus, Staphylococcus, Streptococcus und andere Grammpositive und solche deren Zuordnungen fraglich ist,

So ist "DBC plus Typ A2" für Kreislaufwasser von Papiermaschinen besonders geeignet, ebenso bei Prozessen in der Petrochemie, wo phenolische Verbindungen in das Kühlwasser gelangen können.

Ferner ist "DBC plus Typ L" für Kühlwasserkreisläufe von Raffinerien geeignet, wo Einbrüche von Kohlenwasserstoffen in dem Kühlwasserkreislauf stattfinden können, ebenso bei Kühlkreisläufen von Ölmühlen, also bei der Verarbeitung pflanzlicher Öle. Weiterhin wird "DBC plus Typ L1" insbesondere bei Kühlkreisläufen in der Chemischen Industrie eingesetzt, vor allem wenn mit Ketonen im Kühlwasser gerechnet werden muß.

Die Menge der Bakterien, die , bezogen auf die Menge der organischen Stoffe im Kreislaufwasser, demselben beigegeben werden, beträgt vorzugsweise 1 bis 10¹⁰ Bakterien je kg des gesamten organischen Kohlenstoffs (TOC) der organischen Stoffe, insbesondere 10 bis 10⁹ Bakterien je kg TOC und ganz besonders bevorzugt 10² bis 10⁸ Bakterien je kg TOC.

Dies entspricht bei Trockenbakterien, insbesondere "DBC plus" Bakterien etwa 10⁻⁶ bis 50 g je kg TOC, bzw. 10⁻⁶ bis 5 g je kg TOC, bzw. 10⁻⁴ bis 0,5g je kg TOC.

Dem Kreislaufwasser werden neben den Bakterien vorzugsweise noch andere Zusätze beigegeben. So ist vorstehend bereits auf den Zusatz von Tensiden hingewiesen worden, die die Sesilität der Bakterien und sonstiger Mikroorganismen an den Oberflächen der Maschinenteile herabsetzen. Weiterhin ist es vorteilhaft zur Förderung des Wachstums der zugesetzten Bakterien Suppline zuzusetzen (vgl. Hans G.Schlegel, Allgemeine Mikrobiologie, 6. Aufl. 1985, S 174).

Der Zusatz von Lignosulfonaten, wie er in der DE-PS 34 47 686 beschrieben wird, kann ebenfalls von Vorteil sein, wobei jedoch bei dem erfindungsgemäßen Verfahren auf Biozide völlig verzichtet wird.

Weiterhin ist es vorteilhaft beim erfindungsgemäßen Verfahren Enzyme zuzusetzen, welche den Abbau der im Kreislaufwasser enthaltenen organischen Stoffe katalysieren. Als Enzyme können z.B. eingesetzt werden: Amylasen, Proteasen, Pektinasen, Cellulasen, Acylasen, Aldolasen, Alkanoxygenasen, Alkoholdehydrogenasen, Dehydrogenasen, Phosphatasen, Dehydrasen, Dehydratasen, Oxygenasen, Oxidesen, Permeasen, Kinasen, Carboxylasen, Lipasen, Phosphorylasen, Decarboxylasen, Reduktasen, Oxidoreduktasen und Hemicellulasen.

Die Art der verwendeten Enzyme richtet sich dabei nach dem betreffenden Anwendungsfall. So werden z.B. Cellulasen und Hemicellulasen bevorzugt dem Siebwasser von Papiermaschinen zugesetzt, Proteasen hingegen Kühlkreisläufen der Nahrungsmittelverarbeitung und Lipasen insbesondere Kühlkreisläufen von Ölmühlen und anderen Nahrungsmittel verarbeitenden Prozessen.

Die Menge des oder der beigefügten Enzyme beträgt vorzugsweise 10 IU (International Unit) bis 500 000 IU je kg TOC. Im allgemeinen reicht jedoch eine Menge von maximal 10 000 oder maximal 1000 IU je kg TOC aus.

Ferner ist bei dem erfingungsgemäßen Verfahren ein hoher Gehalt an gelöstem Sauerstoff in dem Kreislaufwasser von Vorteil. Dadurch wird nämlich der Abbau der organischen Stoffe beschleunigt und damit die hohe Belastung des Kreislaufwassers mit diesen Stoffen vermindert.

Die Sauerstoffzufuhr kann dabei durch Begasung des Kreislaufwassers mit Sauerstoff oder Luft oder durch Zufuhr Sauerstoffabgebender Verbindungen, wie H₂O₂ oder Peroxide, erfolgen.

Die Zugabe der Bakterien und der weiteren Zusätze wird beim erfindungsgemäßen Verfahren kontinuierlich durchgeführt. wor unter auch eine Zugabe in kleineren Portionen über die Zeit zu verstehen ist. Dadurch wird die Dominanz der zugegebenen Bakterienart aufrechterhalten und damit die Prozeßstabilität gewährleistet.

Die Zugabe der Bakterien und der weiteren Zusätze kann dabei zeitproportional erfolgen, d.h es wird vorzugsweise kontinuierlich eine bestimmte Menge über eine bestimmte Zeit, also z.B. einen Tag, zugeführt. Stattdessen ist auch eine kontinuierliche mengenproportionale Zugabe möglich. D.h. der TOC-Gehalt wird ständig gegebenenfalls automatisch analysiert und entsprechend dem analysierten TOC-Gehalt wird die Menge der zugegebenen Bakterien und weiteren Zusätze geregelt. Die mengenproportionale Zugabe ist insbesondere bei Prozessen mit starken Schwankungen des TOC-Gehaltes vorzuziehen.

Eine geeignete Anlage zur Durchführung des erfindungsgemäßen Verfahrens weist eine Dosierstrecke auf an der die Bakterien und/oder sonstigen Mikroorganismen und gegebenenfalls die weiteren Zusätze kontinuierlich dem Kreislaufwasser zugegeben werden.

Die Dosierstrecke ist vorzugsweise mit einer Dosiereinrichtung versehen, durch die die Mikroorganismen bzw. Bakterien automatisch zugegeben werden, sowie gegebenfalls mit einer oder mehreren weiteren Dosiereinrichtungen, mit denen die automatische Zugabe der weiteren Zusätze erfolgt.

Die einzelnen Komponenten werden dabei an der Dosierstrecke möglichst örtlich getrennt zugeführt. D.h., wenn beispielsweise Proteasen als Enzyme eingesetztwerden. so erfolgt die Zufuhr derselben an einer Stelle stromaufwärts von derjenigen Stelle, an der die Bakterien zugeführt werden. Denn die Proteasen sollen sich mit ihren aktiven Zentren an die organischen Stoffe im Kreislauf anlagern und deren Abbau katalysieren. Würden die Proteasen mit ihren aktiven Zentren direkt mit den zugesetzten Bakterien in Kontakt kommen, so würden sie den Abbau von Bakterienprotein beschleunigen und damit die zugesetzten Bakterien schädigen.

Aus diesem Grunde wird beispielsweise auch H₂O₂ an einer Stelle oder an Stellen zugesetzt, die stromaufwärts von der Zugabestelle des Enzyms und der Bakterien liegen, da H₂O₂ in zu hoher Konzentration ein Zellgift darstellt und die Enzyme beschädigen kann. Aus diesem Grunde wird die H₂O₂-Zugabe vorzugsweise über die gesamte Anlage verteilt.

Das erfindungsgemäße Verfahren ist insbesondere zur Herabsetzung der Schleimbildung und Belagbildung in solchen Anlegen geeignet, mit denen das Siebwasser von Papiermaschinen im Kreislauf geführt wird, sowie in solchen Anlagen, in denen Kühlwasser im Kreislauf geführt wird.

## Patentansprüche

1. Verfahren zur Herabsetzung der Schleim- und Belagbildung in Anlagen, in denen Wasser im Kreislauf geführd wird, ohne Zusatz von Bioziden, wobei dem Kreislaufwasser gezielt in Abhängigkeit von der organischen Fracht nicht-sessile, lebende Mikroorganismen kontinuierlich zugegeben werden, die durch ihre Nährstoffaufnahme den im Kreislaufwasser vorhandenen schleim- und belagbildenden Mikroorganismen die Nährstoffe entziehen, wobei die Mikroorganismen zur Gruppe der Bakterien und Pilze gehören.

2. Verfahren nach Anspruch 1, **dadurch gekennzeichnet**, daß Mischungen von Bakterien und/oder Pilzen eingesetzt werden,

3. Verfahren nach Anspruch 2, **dadurch gekennzeichnet**, daß Bakterien der taxonomischen Gruppe
Aeromonas/Vibrio,
Acinetobacter,
Alcaligenes,
Enterobakterien,
Pseudomonas,
Bacillus,
Lactobacillus,
Micrococcus,
Staphylococous und
Streptococcus
oder Mischungen davon beigegeben werden.

4. Verfahren nach Anspruch 2 oder 3, **dadurch gekennzeichnet**, daß als Bakterien Trockenbakterien oder Mischkulturen von Trockenbakterien eingesetzt werden.

5. Verfahren nach Anspruch 4, **dadurch gekennzeichnet**, daß als Mischkulturen von Trockenbakterien Aeromonas, Acinetobacter, Alcaligenes, Enterobakterien, Pseudomonas, andere Gramnegative, Bacillus, Lactobacillus, Micrococcus, Staphylococcus. Streptococcus und andere Grampositive eingesetzt werden.

6. Verfahren nach einem der vorstehenden Ansprüche, dadurch **gekennzeichnet, daß** die Menge der Mikroorganismen bzw. Bakterien die, bezogen auf die Menge der organischen Stoffe im Kreislaufwasser, dem Kreislaufwasser beigegeben werden. 1 bis 10¹⁰ Mikroorganismen bzw. Bakterien je kg des gesamten organischen Kohlenstoffs (TOC) der organischen Stoffe beträgt.

7. Verfahren nach einem der vorstehenden Ansprüche, dadurch **gekennzeichnet, daß** die Mikroorganismen bzw. Bakterien weitestgehend als freie Mikroorganismen bzw. Bakterien dem Kreislaufwasser beigegeben werden.

8. Verfahren nach einem der vorstehenden Ansprüche, dadurch **gekennzeichnet, daß** dem Kreislaufwesser weitere Zusätze in Form von Enzymen, Supplinen, Tensiden und/oder Lignosulfonaten beigegeben werden.

9. Verfahren nach Anspruch 8, dadurch **gekennzeichnet, daß** die Menge des oder der beigegebenen Enzyme 10 IU (International Unit) bis 500 000 IU je kg TOC beträgt.

10. Verfahren nach einem der vorstehenden Ansprüche, dadurch **gekennzeichnet, daß** dem Kreislaufwasser zusätziich Sauerstoff zugeführt wird.

11. Verfahren nach einem der vorstehenden Ansprüche dadurch **gekennzeichnet, daß** die Beigabe der Mikroorganismen und/oder der weiteren Zusätze und/oder des Sauerstoffs zeit- oder mengenproportional erfolgt.

12. Anwendung des Verfahrens nach einem der Ansprüche 1 bis 11 in einer Anlage, mit der das Siebwasser von Papiermaschinen im Kreislauf geführt wird.

13. Anwendung des Verfahrens nach einem der Ansprüche 1 bis 11 in einer Anlage, mit der Kühlwasser im Kreislauf geführt wird.

## Claims

1. Method of reducing the buildup of slime and film in plant which circulates water, without the addition of biocides, wherein nonsessile living microorganisms are continuously added in controlled manner to the circulating water in accordance with the organic load, these microorganisms, by their uptake of nutrients, taking the nutrients from the slime- and film-forming microorganisms present in the circulating water, the said microorganisms belonging to the group of bacteria and fungi.

2. Method according to claim 1, characterised in that mixtures of bacteria and/or fungi are used.

3. Method according to claim 2, characterised in that bacteria of the taxonomic group
Aeromonas/Vibrio,
Acinetobacter,
Alcaligenes,
Enterobacteria,
Pseudomonas,
Bacillus,
Lactobacillus,
Micrococcus,
Staphylococcus and
Streptococous
or mixtures thereof are added.

4. Method according to claim 2 or 3, characterised in that the bacteria used are dry bacteria or mixed cultures of dry bacteria.

5. Method according to claim 4, characterised in that the mixed cultures of dry bacteria used are Aeromonas, Acinetobacter, Alcaligenes, Enterobacteria, Pseudomonas, other Gram-negatives, Bacillus, Lactobacillus, Micrococcus, Staphylococcus, Streptococcus and other Gram-positives.

6. Method according to one of the preceding claims, characterised in that the quantity of microorganisms or bacteria which are added to the circulating water, based on the quantity of organic matter in the circulating water, is from 1 to 10¹⁰ microorganisms or bacteria per kg of the total organic carbon (TOC) of the organic substances.

7. Method according to one of the preceding claims, characterised in that the microorganisms or bacteria are added to the circulating water predominantly as free microorganisms or bacteria.

8. Method according to one of the preceding claims, characterised in that other additives are added to the circulating water, in the form of enzymes, supplines, surfactants and/or lignosulphates.

9. Method according to claim 8, characterised in that the quantity of the enzyme or enzymes added is from 10 IU (International Units) to 500,000 IU per kg of TOC.

10. Method according to one of the preceding claims, characterised in that oxygen is additionally added to the circulating water.

11. Method according to one of the preceding claims, characterised in that the addition of the microorganisms and/or the other additives and/or the oxygen is carried out in proportion to time or quantity.

12. Use of the process according to one of claims 1 to 11 in a plant which circulates the wire water of papermaking machines.

13. Use of the process according to one of claims 1 to 11 in a plant which circulates cooling water.

## Revendications

1. Procédé pour réduire la formation de mucilage et de dépôt dans des installations dans lesquelles de l'eau est envoyée en circuit fermé sans ajout de biocides, procédé dans lequel on ajoute en continu à l'eau du circuit, délibérément en fonction de sa charge organique, des micro-organismes vivants non sessiles, appartenant au groupe des bactéries et des champignons, qui, par leur consommation de substances nutritives, privent les microorganismes formateurs de dépôt et de mucilage présents dans l'eau du circuit des substances nutritives.

2. Procédé selon la revendication 1, caractérisé en ce qu'on utilise des mélanges de bactéries et/ou de champignons.

3. Procédé selon la revendication 2, caractérisé en ce qu'on ajoute des bactéries du groupe taxonomique :
Aeromonas/Vibrio,
Acinetobacter
Alcaligenes,
Enterobactéries,
Pseudomonas,
Bacillus,
Lactobacillus
Micrococcus,
Staphylococcus et
Streptococcus
ou des mélanges de celles-ci.

4. Procédé selon les revendications 2 ou 3, caractérisé en ce qu'on utilise comme bactéries des bactéries sèches ou des cultures mixtes de bactéries sèches.

5. Procédé selon la revendication 4, caractérisé en ce qu'on utilise comme cultures mixtes de bactéries sèches :
Aeromonas, Acinetobacter, Alcaligenes, des entérobactéries Pseudomonas, d'autres bactéries Gram-négatives, Bacillus, Lactobacillus Micrococcus, Staphylococcus, Streptococcus et d'autres bactéries Grampositives.

6. Procédé selon l'une quelconque des revendications précédentes, caractérisé en ce que la quantité des micro-organismes ou des bactéries qui sont ajoutés à l'eau du circuit, rapportée à la quantité des substances organiques dans l'eau du circuit, est de 1 à 10¹⁰ micro-organismes ou bactéries par kilo du carbone organique total (COT) des substances organiques.

7. Procédé selon l'une quelconque des revendications précédentes, caractérisé en ce que l'on ajoute autant que possible à l'eau du circuit les micro-organismes ou les bactéries sous forme de micro-organismes ou de bactéries libres.

8. Procédé selon l'une quelconque des revendications précédentes, caractérisé en ce qu'on ajoute à l'eau du circuit d'autres additifs sous la forme d'enzymes, de supplines, d'agents tensioactifs et/ou de lignosulfonates.

9. Procédé selon la revendication 8, caractérisé en ce que la quantité de la ou des enzymes ajoutées est de 10 UI (Unité Internationale) à 500.000 UI par kilo de COT.

10. Procédé selon l'une quelconque des revendications précédentes, caractérisé en ce qu'on envoie en outre de l'oxygène dans l'eau du circuit.

11. Procédé selon l'une quelconque des revendications précédentes, caractérisé en ce que l'addition des micro-organismes et/ou des autres additifs et/ou de l'oxygène s'effectue d'une manière proportionnelle au temps ou aux quantités.

12. Utilisation du procédé selon l'une quelconque des revendications 1 à 11 dans une installation avec laquelle l'eau blanche des machines à papier est envoyée en circuit fermé.

13. Utilisation du procédé selon l'une des revendications 1 à 11, dans une installation avec laquelle de l'eau de refroidissement est envoyée en circuit fermé.
